# EUROPEAN PATENT APPLICATION

(11) **EP 3 018 621 A1**
(43) Date of publication of application: **11.05.2016**
(21) Application number: 14868321.2
(22) Date of filing: 16.10.2014
(51) Int. Cl.: G06Q 30/02, G06F 3/048

(54) **SHOPPING SUPPORT DEVICE AND SHOPPING SUPPORT METHOD**

(30) Priority: 06.12.2013 JP 2013253210
(71) Applicant: NTT Docomo, Inc., Tokyo 100-6150 (JP)
(72) Inventor: MATSUI Kenichi, Tokyo 100-6150 (JP); KATO Sadaatsu, Tokyo 100-6150 (JP); MURAKAMI Keiichi, Tokyo 100-6150 (JP); UEDA Kensuke, Tokyo 100-6150 (JP); OHATA Maki, Tokyo 100-6150 (JP); KOTANI Naoko, Tokyo 100-6150 (JP); SAITOU Tetsu, Tokyo 100-6150 (JP); SODA Kazuyuki, Tokyo 100-6150 (JP); MITSUYAMA Yasuchika, Tokyo 100-6150 (JP)
(74) Representative: Beder, Jens
(86) International application number: PCT/JP2014/077581
(87) International publication number: WO 2015/083450

(57) **Abstract**

A shopping support device 1 is a wearable device including an imaging unit 1b. The shopping support device 1 includes a storage unit 10 that stores a shopping list including any one or more pieces of information out of shop information relating to a shop for shopping and commodity information relating to a commodity to be purchased, a recognition unit 12 that performs image recognition on a vicinity image which is picked up by the imaging unit 1b, a determination unit 14 that determines whether a target indicated by the information is present in the vicinity image, on the basis of an image recognition result and the information included in the shopping list stored by the storage unit 10, and a notification unit 15 that notifies the user of the presence of the target determined to be present by the determination unit 14.

## Description

### Technical Field

The present invention relates to a shopping support device and a shopping support method for supporting a user's shopping.

### Background Art

Hitherto, devices that support a user's shopping have been known. For example, the following Patent Literature 1 discloses a shopping support server that receives a shopping request including a commodity desired to be purchased, from a requester, and transmits the e-mail including the contents to a person who requests shopping.

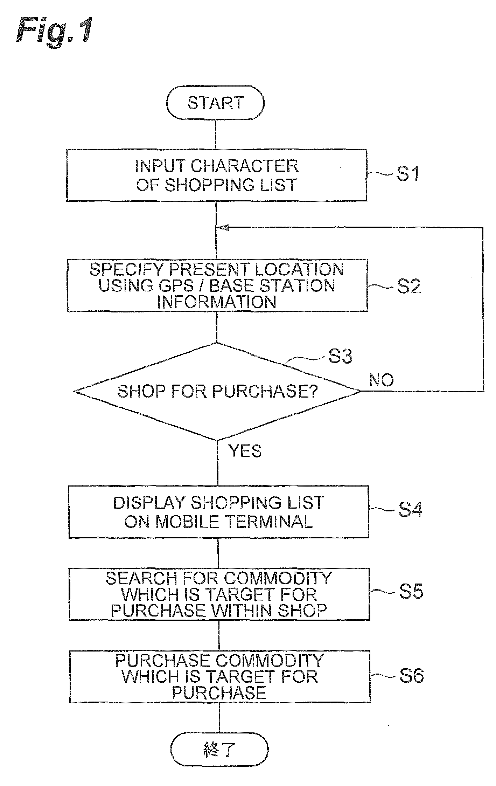

In addition, hitherto, shopping support systems using a mobile terminal such as a smartphone or a cellular phone have also been known. Fig. 1 is a flow diagram illustrating processes which are executed in a shopping support system of the related art using a mobile terminal. As shown in Fig. 1, in the shopping support system, a user first performs input of characters for a commodity desired to be purchased using the keyboard, dial keys or the like of the mobile terminal, and registers the commodity in a shopping list (step S1). A commodity having once been purchased can be registered in a shopping list from a purchase history or the like, but basically, a user operates a mobile terminal, and registers a commodity desired to be purchased in the shopping list.

When a user goes out with a mobile terminal, the mobile terminal periodically specifies a present location, using a global positioning system (GPS) included in the host terminal or base station information acquired from a base station through moving object communication (step S2). Next, the mobile terminal determines whether the specified present location is located in the vicinity of a shop at which a commodity is scheduled to be purchased (step S3). When it is determined in S3 that the present location is not located in the vicinity thereof, the process returns to S2, and the mobile terminal continuously specifies a present location. When it is determined in S3 that the present location is located in the vicinity thereof, the mobile terminal sends out a ring tone or vibration, and notifies a user of arrival at the vicinity of a shop at which a commodity is scheduled to be purchased.

The user who has perceived notification from the mobile terminal confirms his/her region in the vicinity, and specifies a shop purchase. The user enters the specified shop, and causes the mobile terminal to display the shopping list registered in advance (step S4). Next, the user searches for a commodity which is a target for purchase at the shop while viewing the shopping list displayed in S4 (step S5), purchases the commodity which is a target for purchase when finding the commodity (step S6), and terminates shopping.

### Citation List

### Patent Literature

[Patent Literature 1] Japanese Unexamined Patent Publication No. 2002-117221

### Summary of Invention

### Technical Problem

However, in the foregoing shopping support system, there is a problem in that the user needs to specify a shop or a commodity which is a target for purchase by himself (or herself), and that, in some cases, the user fails to find the shop or the commodity which is a target for purchase. Besides, since the user needs to perform a character input operation when commodities are registered in the shopping list, the user's time and effort is required. Thereby, there is the possibility of the user hesitating about the registration and thus not registering all the commodities scheduled for purchase in the shopping list. In addition, the user is notified of arrival at the vicinity of a shop at which a commodity is scheduled to be purchased by a ring tone or vibration being sent out, but the user may not perceive the sound or vibration, and thus there may be the possibility of the user not perceiving arrival at the vicinity of the shop.

Consequently, the present invention is contrived in view of such problems, and an object thereof is to provide a shopping support device and a shopping support method which are capable of more reliably supporting a user's shopping.

### Solution to Problem

In order to solve the above problem, according to an aspect of the present invention, there is provided a shopping support device including imaging means capable of picking up an image of the vicinity of a user who is wearing the device, including: storage means for storing a shopping list including any one or more pieces of information out of shop information relating to a shop for shopping and commodity information relating to a commodity to be purchased; recognition means for performing image recognition on a vicinity image which is picked up by the imaging means; determination means for determining whether a target indicated by the information is present in the vicinity image, on the basis of an image recognition result of the vicinity image from the recognition means, and the shop information included in the shopping list stored by the storage means; and notification means for notifying the user of the presence of the target determined to be present by the determination means.

According to such a shopping support device, it is determined whether the target indicated by the information is present in the vicinity image, on the basis of the image recognition result of the picked-up vicinity image and the information included in the shopping list, and the user is notified of the presence of the target determined to be present. When such a configuration is adopted, the user can recognize that a target indicated by the information included in the shopping list, for example, a shop for shopping, a commodity to be purchased, or the like is present in the vicinity of the user, without performing a special operation. Therefore, the user can reliably perceive, for example, the shop for shopping, the commodity to be purchased, or the like without much time and effort, and the user's shopping can be more reliably supported.

In addition, in the shopping support device according to the aspect of the present invention, the storage means may store a shopping list including shop information and commodity information, the determination means may be constituted by shop determination means for determining whether a shop indicated by the shop information is present in the vicinity image, on the basis of an image recognition result of the vicinity image from the recognition means, and the shop information included in the shopping list stored by the storage means, and commodity determination means for determining whether a commodity indicated by the commodity information is present in the vicinity image, on the basis of the image recognition result of the vicinity image from the recognition means, and the commodity information included in the shopping list stored by the storage means, and the notification means may notify the user of the presence of the shop determined to be present by the shop determination means, and notify the user of the presence of the commodity determined to be present by the commodity determination means. When such a configuration is adopted, a user is notified of the presence of a shop indicated by the shop information included in the shopping list when the shop is present in the vicinity image, and the user is notified of the presence of a commodity indicated by the commodity information included in the shopping list when the commodity is present in the vicinity image. Thereby, the user can reliably perceive a shop for shopping and a commodity to be purchased without much time and effort, and the user's shopping can be more reliably supported.

In addition, in the shopping support device according to the aspect of the present invention, the storage means may store a shopping list in which shop information and commodity information relating to a commodity to be purchased at a shop indicated by the shop information are associated with each other, or a shopping list in which shop information and commodity information relating to a commodity which is sold at a shop indicated by the shop information are associated with each other, and when the notification means notifies the user of the presence of the shop determined to be present by the shop determination means, the notification means may also notify the user of the presence of the commodity indicated by the commodity information associated with the shop information relating to the shop in the shopping list stored by the storage means. When such a configuration is adopted, the user is notified of the presence of a shop for shopping in the vicinity, and is also notified of the presence of a commodity to be purchased at the shop or the presence of a commodity which is sold at the shop. Therefore, the user can be made in advance of commodities and the like to be purchased at a shop before actually entering the shop, the user can perform various determinations on the basis thereof, and the like, thereby allowing the user's convenience to be improved.

In addition, in the shopping support device according to the aspect of the present invention, the device may further include display means for displaying the vicinity image picked up by the imaging means to the user, and the notification means may display the information so as to be superimposed on the vicinity image displayed by the display means when the target indicated by the information included in the shopping list is determined to be present by the shop determination means. When such a configuration is adopted, information included in the shopping list present in the vicinity, for example, information such as a shop for shopping or a commodity to be purchased is displayed so as to be superimposed on the vicinity image displayed to the user. Therefore, the information such as, for example, a shop for shopping or a commodity to be purchased enters the user's eyesight, and thus it is possible to more reliably perceive the presence than in the notification thereof through a sound or vibration, and to more reliably support the user's shopping. In addition, for example, when information is displayed so as to be superimposed on the vicinity image, the information is displayed so as to be superimposed in the vicinity of a place where a target indicated by the information is actually present in the vicinity image, and thus the user can easily perceive where specifically the target is located, thereby allowing the user's convenience to be improved.

In addition, in the shopping support device according to the aspect of the present invention, the device may further include registration means for registering the shop information or the commodity information which is the image recognition result from the recognition means, in the shopping list stored by the storage means. When such a configuration is adopted, it is possible to register, for example, shop information or commodity information picked up by the user using the imaging means, as the shop information or the commodity information to be registered in the shopping list. Thereby, for example, the user does not need to register the shop information or the commodity information through a character input operation, and thus it is possible to improve the user's convenience, such as to reduce the user's time and effort.

In addition, in the shopping support device according to the aspect of the present invention, the storage means may store a shopping list including shop information inclusive of position information, which is shop information, of a shop indicated by the shop information, the device may further include acquisition means for acquiting position information when the vicinity image is picked up by the imaging means, and when the determination means determines whether the shop indicated by the shop information included in the shopping list is present in the vicinity image, the determination means may further determine whether the shop is present on the basis of the degree of coincidence between the position information of the shop included in the shop information and the position information acquired by the acquisition means. When such a configuration is adopted, it is possible to further determine whether a shop indicated by the shop information included in the shopping list is present in the vicinity on the basis of the position information of the shop, and to more reliably determine the presence of the shop. Thereby, it is possible to more reliably support a user's shopping.

Incidentally, an aspect of the present invention can also be described as the invention of a shopping support method as follows, in addition to being capable of being described as the invention of the shopping support device as stated above. These are substantially the same inventions, differing only in category, and exhibit the same operational effects.

That is, according to an aspect of the present invention, there is provided a shopping support method which is executed by a shopping support device including imaging means capable of picking up an image of the vicinity of a user who is wearing the device, and storage means for storing a shopping list including any one or more pieces of information out of shop information relating to a shop for shopping and commodity information relating to a commodity to be purchased, the method including: a recognition step of performing image recognition on a vicinity image which is picked up by the imaging means; a determination step of determining whether a target indicated by the shop information is present in the vicinity image, on the basis of an image recognition result of the vicinity image in the recognition step, and the shop information included in the shopping list stored by the storage means; and a notification step of notifying the user of the presence of the target determined to be present in the determination step.

### Advantageous Effects of Invention

It is possible to more reliably support a user's shopping.

### Brief Description of Drawings

Fig. 1 is a flow diagram illustrating processes which are executed in a shopping support system of the related art using a mobile terminal.
Fig. 2 is a configuration diagram of a shopping support device according to an embodiment of the present invention.
Fig. 3 is a functional block diagram of the shopping support device according to the embodiment of the present invention.
Fig. 4 is a diagram illustrating a hardware configuration of the shopping support device according to the embodiment of the present invention.
Fig. 5 is a diagram illustrating an example of a table of information included in a shopping list.
Fig. 6 is a diagram illustrating a scene obtained by picking up an image of a commodity to be registered in the shopping list, using the shopping support device according to the embodiment of the present invention.
Fig. 7 is a diagram illustrating a scene obtained by picking up an image of the vicinity landscape of an excursion destination, using the shopping support device according to the embodiment of the present invention.
Fig. 8 is a diagram illustrating a scene in which information of a commodity to be purchased at a shop is superimposedly displayed together with shop information by the shopping support device according to the embodiment of the present invention.
Fig. 9 is a diagram illustrating a scene obtained by picking up an image of a commodity shelf having commodities placed thereon, using the shopping support device according to the embodiment of the present invention.
Fig. 10 is a flow diagram illustrating processes (shopping support method) which are executed in the shopping support device according to the embodiment of the present invention.

### Description of Embodiments

Hereinafter, an embodiment of a shopping support device and a shopping support method will be described in detail with reference to the accompanying drawings. Meanwhile, in the description of the drawings, the same components are denoted by the same reference numerals and signs, and thus the description thereof will not be repeated.

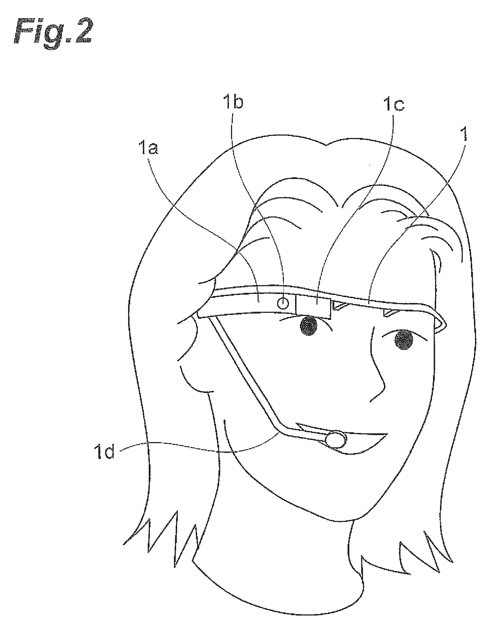

The shopping support device 1 according to the embodiment of the present invention is a type of wearable device which is a computer capable of being carried around on a body, that is, a head mounted display. Fig. 2 is a configuration diagram of a shopping support device 1. As shown in Fig. 2, the shopping support device 1 is configured to include a main body 1a, an imaging unit 1b (imaging means), a display unit 1c (display means), and a voice input unit 1d.

The main body 1a is a computer system body, and performs process control of the entire shopping support device 1 such as input and output control of the imaging unit 1b, the display unit 1c and the voice input unit 1d, an input of information from the imaging unit 1b and the voice input unit 1d, an arithmetic operation on the basis of the input information, and an output of information of arithmetic operation results, instructions or the like to the display unit 1c. Meanwhile, an operating system (OS) for a smartphone may be incorporated in the main body 1a.

The imaging unit 1b is capable of picking up an image of the vicinity of a user who wears the shopping support device 1, and is in particular a camera. The imaging unit 1b may pick up an image of the landscape in the eyesight direction of a user.

The display unit 1c is capable of displaying information to a user, and is in particular a display. The display unit 1c is disposed at a position in the vicinity of a user's eye like a spectacle lens. The display unit 1c displays a vicinity image picked up by the imaging unit 1b.

The voice input unit 1d is capable of inputting a voice which is uttered by a user, and is in particular a microphone.

Meanwhile, the shopping support device 1 may further include components other than stated, for example, a detection camera that detects a user's eyewink, a speaker that outputs a sound to a user, and the like.

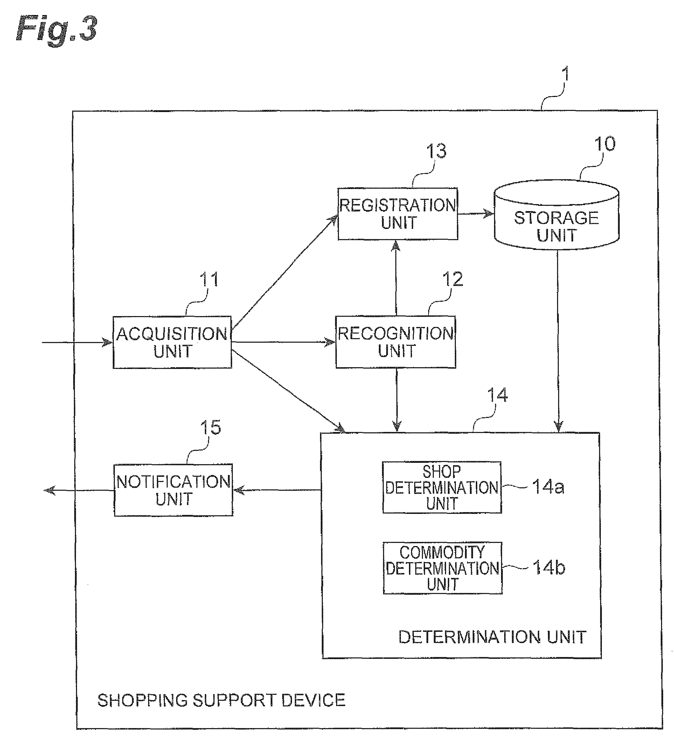

Fig. 3 is a functional block diagram of the shopping support device 1. As shown in Fig. 3, the shopping support device 1 is configured to include a storage unit 10 (storage means), an acquisition unit 11 (acquisition means), a recognition unit 12 (recognition means), a registration unit 13 (registration means), a determination unit 14 (determination means), and a notification unit 15 (notification means). In addition, the determination unit 14 is constituted by a shop determination unit 14a (shop determination means) and a commodity determination unit 14b (commodity determination means).

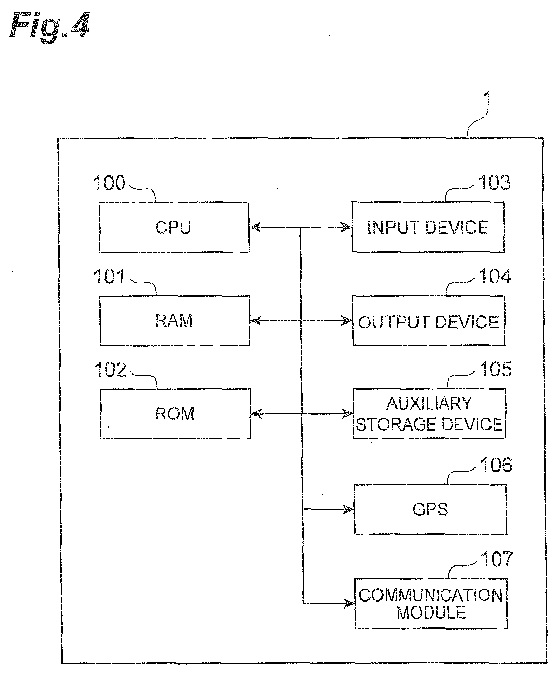

The shopping support device 1 is constituted by hardware such as a CPU. Fig. 4 is a diagram illustrating an example of a hardware configuration of the shopping support device 1. The shopping support device 1 shown in Fig. 3 is configured as a computer system including, physically, as shown in Fig. 4, a CPU 100, a RAM 101 and a ROM 102 which are main storage devices, an input device 103 such as the imaging unit 1b and the voice input unit 1d, an output device 104 such as the display unit 1c, an auxiliary storage device 105, a GPS 106, a communication module 107 that performs moving object communication, and the like.

The function of each functional block of the shopping support device 1 shown in Fig. 3 is realized by reading predetermined computer software on hardware such as the CPU 100 and the RAM 101 shown in Fig. 4, to thereby bring the input device 103, the output device 104, the auxiliary storage device 105, the GPS 106 and the communication module 107 into operation on the basis of control of the CPU 100, and perform reading and writing of data in the RAM 101.

Hereinafter, each functional block of the shopping support device 1 shown in Fig. 3 will be described.

The storage unit 10 stores a shopping list including any one or more pieces of information out of shop information relating to a shop for shopping and commodity information relating to a commodity to be purchased. The storage unit 10 may store a shopping list including both the shop information and the commodity information. The storage unit 10 may store a shopping list in which shop information and commodity information relating to a commodity to be purchased at a shop indicated by the shop information are associated with each other, or a shopping list in which shop information and commodity information relating to a commodity to be sold at a shop indicated by the shop information are associated with each other. The storage unit 10 may store a shopping list including shop information inclusive of position information, which is shop information, of a shop indicated by the shop information.

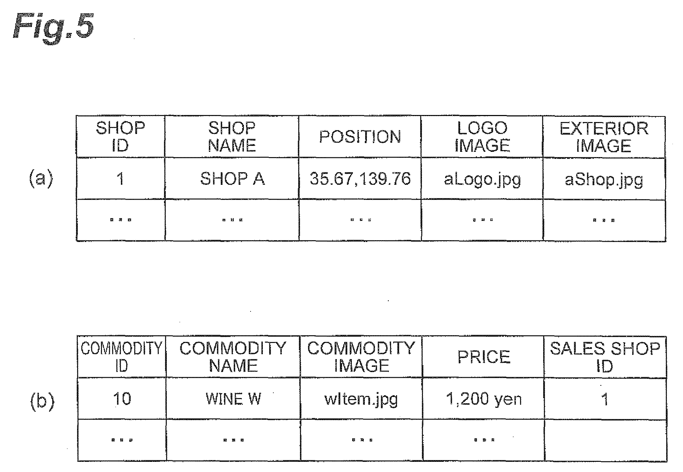

Fig. 5 is a diagram illustrating an example of a table of information included in a shopping list. Fig. 5(a) is a diagram illustrating an example of a table of shop information included in the shopping list. As shown in Fig. 5(a), in the shop information, a shop ID for identifying a shop, a shop name which is the name of the shop, position information (such as latitude or longitude) indicating the geographical position of the shop, a logo image which is an image (photograph) indicating the logo of the shop, and an exterior image which is an image (photograph) indicating the building exterior of the shop are associated with each other. Fig. 5(b) is a diagram illustrating an example of a table of commodity information included in the shopping list. As shown in Fig. 5(b), in the commodity information, a commodity ID for identifying a commodity, a commodity name which is the name of the commodity, a commodity image which is the image (photograph) of the commodity, the price of the commodity, and a sales shop ID (shop ID of the above-mentioned shop information) which is the shop ID of a sales shop at which the commodity is sold are associated with each other. Here, regarding the sales shop ID in the commodity information, the commodity indicated by the commodity information indicates a commodity which is purchased (to be purchased by a user) at a shop indicated by the shop information indicated by the sales shop ID, or a commodity which is sold at a shop of the shop information indicated by the sales shop ID.

The acquisition unit 11 acquires a vicinity image picked up by the imaging unit 1b. The acquisition unit 11 may acquire a vicinity image, and may acquire position information of the shopping support device 1 acquired by the GPS 106 when the vicinity image is picked up, or position information of the shopping support device 1 based on base station information acquired by the communication module 107. In addition, the acquisition unit 11 may acquire voice information which is input by the voice input unit 1d. The acquisition unit 11 outputs the acquired information (such as a vicinity image, position information and voice information) to the recognition unit 12, the registration unit 13 and the determination unit 14 which are described later.

The recognition unit 12 performs image recognition on the vicinity image which is input from the acquisition unit 11 and is picked up by the imaging unit 1b. As the image recognition, a general image recognition technique is adopted. The recognition unit 12 extracts, for example, text information based on an optical character reader (OCR), image object information based on an image analysis, or the like, as an image recognition result. In addition, the recognition unit 12 may perform voice recognition on the voice information which is input from the acquisition unit 11 and is input by the voice input unit 1d. As the voice recognition, a general voice recognition technique is adopted. The recognition unit 12 extracts text information corresponding to the input voice information, as a voice recognition result. The recognition unit 12 outputs recognition results (such as the image recognition result and the voice recognition result) to the registration unit 13 and the determination unit 14 which are described later.

The registration unit 13 registers the recognition results from the recognition unit 12 which are input from the recognition unit 12, as shop information or commodity information, in the shopping list stored by the storage unit 10.

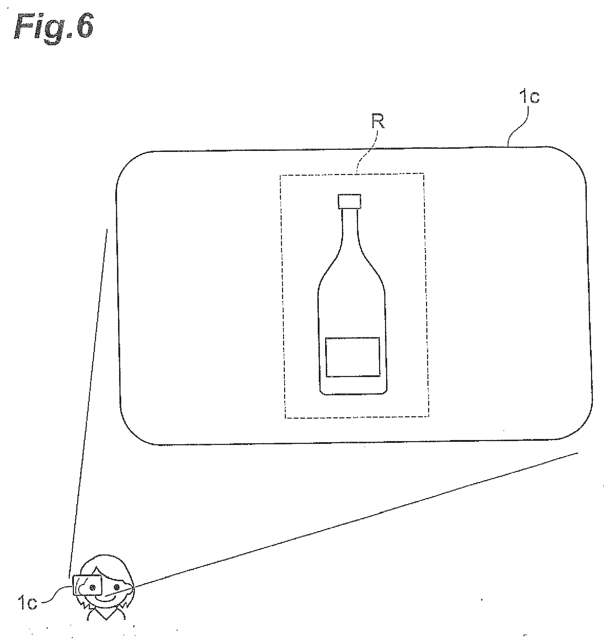

A specific example of a process performed by the registration unit 13 will be described with reference to Fig. 6. Fig. 6 is a diagram illustrating a scene obtained by picking up an image of a commodity to be registered in the shopping list, using the shopping support device 1. More specifically, a user faces the direction of wines which are a commodity scheduled to be registered in the shopping list, a vicinity image including the wines in the eyesight direction of the user is picked up by the imaging unit 1b, and the vicinity image is displayed on the display unit 1c. On the basis of (for example, in accordance with the detection of the user's twice wink) predetermined instructions of the user, the vicinity image is acquired by the acquisition unit 11, image recognition is performed by the recognition unit 12, and an image recognition result relating to a wine present in a region R in the vicinity image is extracted. Here, as the image recognition result, text information "wine W" which is a commodity name of which the character is recognized from the label of the wine and an image file "wItem.jpg" which is an image (commodity image) of the wine are extracted. The registration unit 13 registers commodity information including the commodity name and the commodity image which are extracted, in the commodity information ("commodity name" column and "commodity image" column) included in the shopping list stored by the storage unit 10.

In addition, the user utters "1,200 yen" which is the price of the wine or "shop A" which is the sales shop of the wine, toward the voice input unit 1d. Thereby, the voice information is acquired by the acquisition unit 11, voice recognition is performed by the recognition unit 12, and the text information "1,200 yen" which is a price and the text information "shop A" which is a sales shop are extracted as the voice recognition result. The registration unit 13 (adds) registers commodity information including the extracted price and sales shop (sales shop ID corresponding thereto), to or in the commodity information ("prince" column and "sales shop ID" column) included in the shopping list stored by the storage unit 10.

For example, before a user goes out from his/her home, company or the like to a shop provided with a commodity which is a target for purchase, the user can register the commodity which is a target for purchase in the shopping list through imaging or utterance using the shopping support device 1. More specifically, the user performs image recognition on a purchased commodity present at his/her home, company or the like, or a commodity displayed on a television or the monitor of a personal computer, or performs voice recognition by uttering a commodity desired to be purchased by the user, thereby allowing the commodity to be registered in the shopping list.

Referring back to Fig. 3, the determination unit 14 determines whether a target indicated by the information is present in the vicinity image, on the basis of the image recognition result of the vicinity image from the recognition unit 12 which is input from the recognition unit 12, and the information included in the shopping list stored by the storage unit 10. More specifically, the determination unit 14 determines whether text information included in the information included in the shopping list (or whether text information corresponding to text information included in the information included in the shopping list is included) is included in the text information which is the image recognition result, determines the target to be present when the text information is included, and determines the target not to be present when the text information is not included. In addition, the determination unit 14 determines (based on a general technique such as the similarity of an image) whether image information included in the information included in the shopping list (or whether image information corresponding to image information included in the information included in the shopping list is included) is included in the image object information which is the image recognition result, determines the target to be present when the image information is included, and determines the target not to be present when the image information is not included.

When the determination unit 14 determines whether the shop indicated by the shop information included in the shopping list is present in the vicinity image, the determination unit may further determine whether the shop is present on the basis of the degree of coincidence between position information of the shop included in the shop information and position information which is input from the acquisition unit 11 and is acquired by the acquisition unit 11. For example, the determination unit 14 determines the shop to be present when the target is present in the vicinity image and the degree of coincidence between the pieces of the position information is high (for example, less than a radius error of 50 m), and determines the shop not to be present when the target is not present in the vicinity image or the degree of coincidence between the pieces of the position information is low (for example, equal to or greater than a radius error of 50 m).

In addition, as described above, the determination unit 14 may be constituted by the shop determination unit 14a and the commodity determination unit 14b. The shop determination unit 14a determines whether the shop indicated by the shop information is present in the vicinity image, on the basis of the image recognition result of the vicinity image from the recognition unit 12 and the shop information included in the shopping list stored by the storage unit 10. The commodity determination unit 14b determines whether the commodity indicated by the commodity information is present in the vicinity image, on the basis of the image recognition result of the vicinity image from the recognition unit 12 and the commodity information included in the shopping list stored by the storage unit 10.

The determination unit 14, the shop determination unit 14a and the commodity determination unit 14b output the determination results to the notification unit 15.

The notification unit 15 notifies a user of the presence of the target determined to be present by the determination unit 14, on the basis of the determination results which are input from the determination unit 14. The notification unit 15 may notify the user of the presence of the shop determined to be present by the shop determination unit 14a, and may notify the user of the presence of the commodity determined to be present by the commodity determination unit 14b. When the notification unit 15 notifies the user of the presence of the shop determined to be present by the shop determination unit 14a, the notification unit may also notify the user of the presence of the commodity indicated by the commodity information associated with the shop information relating to the shop in the shopping list stored by the storage unit 10. When the target indicated by information included in the shopping list is determined to be present by the determination unit 14, the notification unit 15 may display the information so as to be superimposed on the vicinity image displayed by the display unit 1c. Meanwhile, when information is displayed so as to be superimposed on the vicinity image, the notification unit 15 may display the information so as to be superimposed in the vicinity of a place where the target indicated by the information is actually present in the vicinity image.

A specific example of a notification method based on the notification unit 15 includes a display output as text information or an image to the display unit 1c, a voice output through a speaker or the like, a vibration output based on a vibration function, and the like.

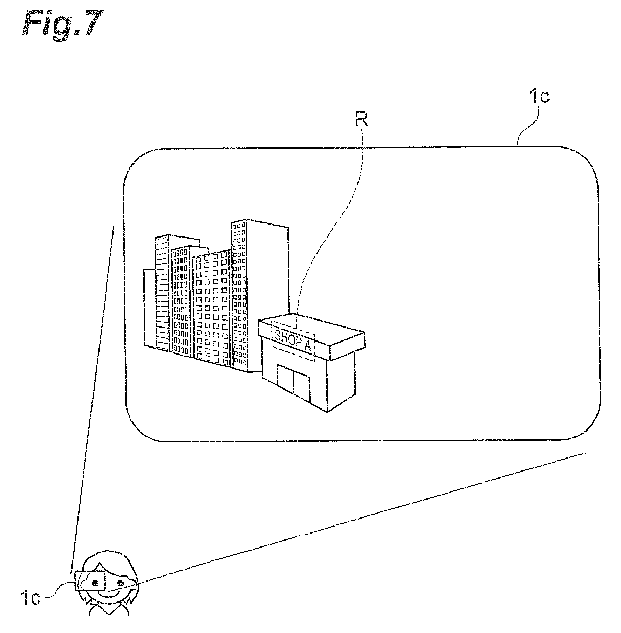

A specific example of processes in the determination unit 14 and the notification unit 15 will be described with reference to Figs. 7 to 9. Meanwhile, the shopping list stored by the storage unit 10 is presumed to be the example of the table shown in Fig. 5.

Fig. 7 is a diagram illustrating a scene obtained by picking up an image of the vicinity landscape of an excursion destination, using the shopping support device 1. In this scene, it is assumed that the recognition unit 12 extracts text information "shop A" from the signboard of a shop included in an R region, as the image recognition result. Then, the determination unit 14 (shop determination unit 14a) determines whether the text information "shop A" is included in the shopping list shown in Fig. 5, and determines that a shop name "shop A" is included in the shop of a shop ID "1" in this case. The determination unit 14 further extracts position information "35.67,139.76" of the shop of the shop ID "1" from the shopping list, and acquires the position information of the shopping support device 1 which is acquired by the GPS 106 and is acquired by the acquisition unit 11 or the position information of the shopping support device 1 based on the base station information acquired by the communication module 107. The position information acquired herein is assumed to be "35.67,139.76". Since the pieces of the position information are the same as each other, the determination unit 14 determines that the position information of the shop of the shop ID "1" and the present position information of the shopping support device 1 are coincident with each other. As stated above, since the "shop A" is included in the vicinity image, and the pieces of the position information are coincident with each other, the determination unit 14 determines that the "shop A" is present in the vicinity image.

In this manner, when a user wears the shopping support device 1 and goes out, the present location of the user is specified by the GPS or the base station information, and the shopping support device 1 performs image recognition on the indication of a shop name such as the signboard of a shop, thereby allowing even a purchase shop to be strictly specified in addition to the present location.

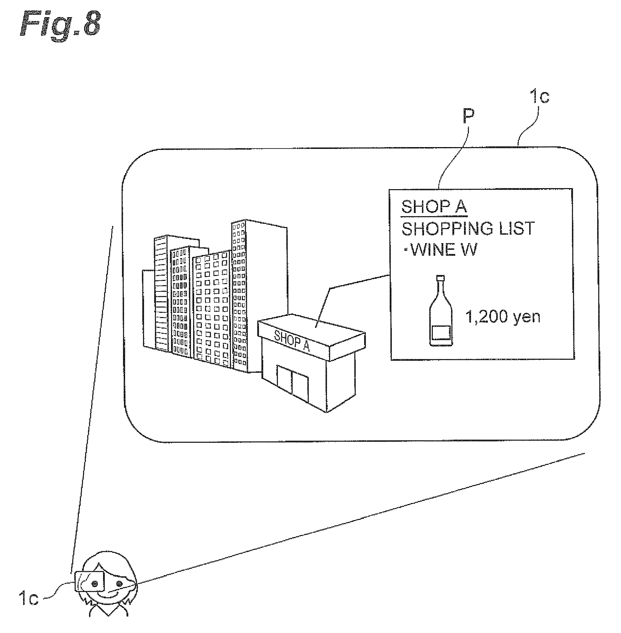

Subsequently to the foregoing determination performed by the determination unit 14, the notification unit 15 notifies a user of the presence of the "shop A". Fig. 8 is a diagram illustrating a scene in which a user is notified of the presence of the "shop A" by the notification unit 15. As shown in Fig. 8, the notification unit 15 displays a pop-up memo P so as to be superimposed on the vicinity image displayed by the display unit 1c in the form of addition to the exterior image of the building of the "shop A". In the pop-up memo P, in addition to the "shop A" which is a shop name, the notification unit 15 performs a display with the inclusion of the commodity name "wine W", the commodity image "wItem.jpg" and the price "1,200 yen" of the commodity (specified using the shop ID of the shop information and the sales shop ID of the commodity information) registered in the shopping list shown in Fig. 5 as the commodity to be purchased at the "shop A".

In this manner, in case of approaching a shop provided with the commodity which is a target for purchase, the shopping support device 1 visually displays the commodity which is a target for purchase at the shop, by a push, on the display unit 1c, as shown in Fig. 8.

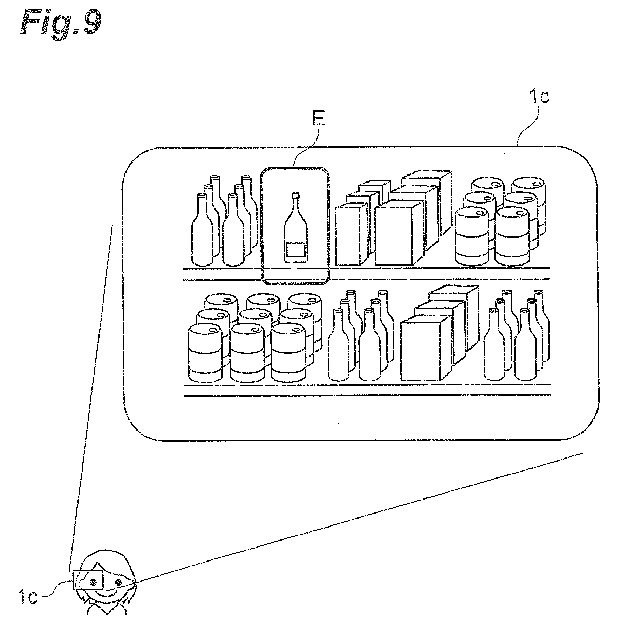

Fig. 9 is a diagram illustrating a scene in which a user enters the "shop A" and picks up an image of a commodity shelf having commodities placed thereon, using the shopping support device 1. In this scene, the determination unit 14 (commodity determination unit 14b) determines whether the commodity image of a commodity of the sales shop ID being "1" indicating the "shop A" is included in the image recognition result from the recognition unit 12, in the shopping list shown in Fig. 5, and determines that the commodity image of the commodity "wine W" is included therein. Then, since the notification unit 15 notifies the user of the presence of the commodity "wine W", as shown in Fig. 9, the notification unit highlights a frame E so as to be superimposed on the vicinity image displayed by the display unit 1c in the vicinity of the image of the commodity "wine W".

In this manner, the shopping support device 1 performs image recognition on commodities provided with a commodity display shelf or the like within the shop, and highlights a commodity which is a target for purchase on the display unit 1c, as shown in Fig. 9, when image recognition is performed on the commodity which is a target for purchase, thereby allowing the user's discovery of the commodity which is a target for purchase to be supported.

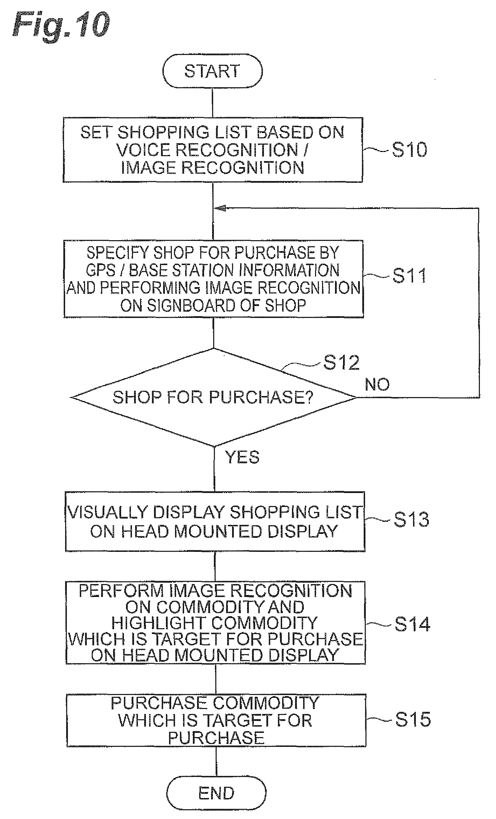

Subsequently, processes of a shopping support method in the shopping support device 1 according to the present embodiment will be described with reference to a flow diagram shown in Fig. 10.

First, the registration unit 13 sets the shopping list on the basis of voice recognition or image recognition (step S10). Next, the recognition unit 12 performs image recognition on the signboard of a shop in the vicinity image (recognition step), the acquisition unit 11 acquires position information, and the determination unit 14 specifies a shop included in the vicinity image (step S11, determination step). Next, the determination unit 14 determines whether the shop specified in S11 is a shop for shopping, on the basis of the shopping list stored by the storage unit 10 (step S12, determination step). When it is determined in S12 that the specified shop is not a shop for shopping, the process returns to S11, and the continuously shopping support device 1 searches for a shop for shopping. When it is determined in S12 that the specified shop is a shop for shopping, the notification unit 15 visually displays the shopping list at the shop on the display unit 1c (step S13, notification step).

Next, the user enters the shop, and picks up commodities within the shop, using the imaging unit 1b. The recognition unit 12 performs image recognition (recognition step), the determination unit 14 determines that the commodity included in the shopping list stored by the storage unit 10 is included (determination step), and the notification unit 15 highlights the commodity which is a target for purchase in the vicinity image displayed by the display unit 1c (step S14, notification step). The user specifies the commodity which is a target for purchase highlighted in S14, and purchases the commodity (step S15).

Next, operational effects of the shopping support device 1 configured as in the present embodiment will be described.

According to the shopping support device 1 of the present embodiment, it is determined whether the target indicated by the information is present in the vicinity image on the basis of the image recognition result of the picked-up vicinity image and the information included in the shopping list, and the presence of the target determined to be present is notified of the user. When such a configuration is adopted, the user can recognize that a target indicated by the information included in the shopping list, for example, a shop for shopping, a commodity to be purchased, or the like is present in the vicinity of the user, without performing a special operation. Therefore, the user can reliably perceive, for example, the shop for shopping, the commodity to be purchased, or the like without much time and effort, and the user's shopping can be more reliably supported.

In addition, according to the shopping support device 1 of the present embodiment, the presence of a shop indicated by the shop information included in the shopping list is notified of a user when the shop is present in the vicinity image, and the presence of a commodity indicated by the commodity information included in the shopping list is notified of the user when the commodity is present in the vicinity image. Thereby, the user can reliably perceive a shop for shopping and a commodity to be purchased without much time and effort, and the user's shopping can be more reliably supported.

In addition, according to the shopping support device 1 of the present embodiment, the user is notified of the presence of a shop for shopping in the vicinity, and is also notified of the presence of a commodity to be purchased at the shop or the presence of a commodity which is sold at the shop. Therefore, the user can be made aware in advance of commodities and the like to be purchased at a shop before actually entering the shop, the user can perform various determinations on the basis thereof, and the like, thereby allowing the user's convenience to be improved.

In addition, according to the shopping support device 1 of the present embodiment, information included in the shopping list present in the vicinity, for example, information such as a shop for shopping or a commodity to be purchased is displayed so as to be superimposed on the vicinity image displayed to the user. Therefore, the information such as, for example, a shop for shopping or a commodity to be purchased enters the user's eyesight, and thus it is possible to more reliably perceive the presence than in the notification thereof through a sound or vibration, and to more reliably support the user's shopping. In addition, for example, when information is displayed so as to be superimposed on the vicinity image, the information is displayed so as to be superimposed on a place where a target indicated by the information is actually present in the vicinity image, and thus the user can easily perceive where specifically the target is located, thereby allowing the user's convenience to be improved.

In addition, according to the shopping support device 1 of the present embodiment, it is possible to register, for example, shop information or commodity information picked up by the user using the imaging means, as the shop information or the commodity information to be registered in the shopping list. Thereby, for example, the user does not need to register the shop information or the commodity information through a character input operation, and thus it is possible to improve the user's convenience, such as to reduce the user's time and effort. In this manner, image recognition or voice recognition is also used for registration in the shopping list, and thus it is possible to easily perform the registration in the shopping list even on a wearable device such as a head mounted display having difficulty in performing input of characters manually.

In addition, according to the shopping support device 1 of the present embodiment, it is possible to further determine whether a shop indicated by the shop information included in the shopping list is present in the vicinity on the basis of the position information of the shop, and to more reliably determine the presence of the shop. Thereby, it is possible to more reliably support a user's shopping.

As stated above, the shopping support device 1 of the present embodiment can provide stress-free shopping support through image recognition, position information positioning and push information provision in a head mounted display, and superimposition display of characters/images on the head mounted display. An image in a user's eyesight direction is recognized using the head mounted display, and thus it is possible to strictly specify a shop for purchase or a commodity which is a target for purchase. In addition to the specification of the present location based on a GPS function or base station information, image recognition is performed on the signboard of a shop or the like using the camera of the head mounted display, and thus it is possible to strictly specify even a shop for purchase.

A commodity to be purchased is previously registered by the shopping support device 1 of the present embodiment with less time and effort, and thus it is possible to display a commodity to be purchased on a head mounted display, in a way easy to understand, in accordance with the present location. In addition, a head mounted display is used, and thus shopping information is visually push-displayed so as to be reliably perceived by a user, thereby allowing an improvement in the user's convenience to be expected.

Meanwhile, the respective functional blocks shown in Fig. 3 are included in the shopping support device 1 of the present embodiment, but some of the functional blocks may be included on the server side connected to the shopping support device 1 in a mobile communication manner. In that case, the shopping support device 1 and the server realize the same function as that of the shopping support device 1 of the present embodiment in cooperation with each other by appropriately transmitting and receiving information. In addition, in that case, for example, in a case of temporarily falling outside of the mobile communication area when image recognition is performed in cooperation with the server in a mobile communication manner, the accuracy of image recognition can be maintained by collectively transmitting pieces of image recognition information to the server side in a case of return within the range.

The shopping support device 1 of the present embodiment is not limited to a head mounted display, and can be similarly applied to other wearable devices, general smartphones, or the like. As a modification example of the shopping support device 1, for example, when a wearable device of a type of mounting on a watch, clothes, a bag or the like is used, image recognition in a user's front direction or traveling direction is performed instead of performing image recognition in the user's eyesight direction as in the head mounted display, and thus it is possible to realize the indication of a commodity desired to be registered in the shopping list or a shop name such as the signboard of a shop, and the image recognition of a commodity which is a target for purchase within a shop, and to provide the same shopping support service as that of the shopping support device 1 of the present embodiment.

### Reference Signs List

1: shopping support device, 1a: main body, 1b: imaging unit, 1c: display unit, 1d: voice input unit, 10: storage unit, 11: acquisition unit, 12: recognition unit, 13: registration unit, 14: determination unit, 14a: shop determination unit, 14b: commodity determination unit, 15: notification unit.

## Claims

1. A shopping support device including imaging means capable of picking up an image of the vicinity of a user who is wearing the device, comprising:
storage means for storing a shopping list including shop information relating to a shop for shopping and commodity information relating to a commodity to be purchased;
recognition means for performing image recognition on a vicinity image which is picked up by the imaging means;
shop determination means for determining whether a shop indicated by the shop information is present in the vicinity image, on the basis of an image recognition result of the vicinity image from the recognition means, and the shop information included in the shopping list stored by the storage means;
commodity determination means for determining whether a commodity indicated by the commodity information is present in the vicinity image, on the basis of the image recognition result of the vicinity image from the recognition means, and the commodity information included in the shopping list stored by the storage means; and
notification means for notifying the user of the presence of the shop determined to be present by the shop determination means, and notifying the user of the presence of the commodity determined to be present by the commodity determination means.

2. The shopping support device according to claim 1, wherein the storage means stores a shopping list in which shop information and commodity information relating to a commodity to be purchased at a shop indicated by the shop information are associated with each other, or a shopping list in which shop information and commodity information relating to a commodity which is sold at a shop indicated by the shop information are associated with each other, and
when the notification means notifies the user of the presence of the shop determined to be present by the shop determination means, the notification means also notifies the user of the presence of the commodity indicated by the commodity information associated with the shop information relating to the shop in the shopping list stored by the storage means.

3. The shopping support device according to claim 1 or 2, further comprising display means for displaying the vicinity image picked up by the imaging means to the user,
wherein the notification means displays the shop information so as to be superimposed on the vicinity image displayed by the display means when the shop indicated by the shop information included in the shopping list is determined to be present by the shop determination means, and displays the commodity information so as to be superimposed on the vicinity image displayed by the display means when the commodity indicated by the commodity information included in the shopping list is determined to be present by the commodity determination means.

4. The shopping support device according to any one of claims 1 to 3, further comprising registration means for registering the shop information or the commodity information which is the image recognition result from the recognition means, in the shopping list stored by the storage means.

5. The shopping support device according to any one of claims 1 to 4, wherein the storage means stores a shopping list including shop information inclusive of position information, which is shop information, of a shop indicated by the shop information,
the device further comprises acquisition means for acquiring position information when the vicinity image is picked up by the imaging means, and
when the shop determination means determines whether the shop indicated by the shop information included in the shopping list is present in the vicinity image, the shop determination means further determines whether the shop is present on the basis of the degree of coincidence between the position information of the shop included in the shop information and the position information acquired by the acquisition means.

6. A shopping support method which is executed by a shopping support device including imaging means capable of picking up an image of the vicinity of a user who is wearing the device, and storage means for storing a shopping list including shop information relating to a shop for shopping and commodity information relating to a commodity to be purchased, the method comprising:
a first recognition step of performing image recognition on a vicinity image which is picked up by the imaging means;
a shop determination step of determining whether a shop indicated by the shop information is present in the vicinity image, on the basis of an image recognition result of the vicinity image in the first recognition step, and the shop information included in the shopping list stored by the storage means;
a shop notification step of notifying the user of the presence of the shop determined to be present in the shop determination step;
a second recognition step of performing image recognition on the vicinity image which is picked up by the imaging means;
a commodity determination step of determining whether a commodity indicated by the commodity information is present in the vicinity image, on the basis of the image recognition result of the vicinity image in the second recognition step, and the commodity information included in the shopping list stored by the storage means; and
a commodity notification step of notifying the user of the presence of the commodity determined to be present in the commodity determination step.
